(19) **Europäisches Patentamt**

**European Patent Office**

**Office européen des brevets**

(11) Veröffentlichungsnummer: **0 247 279**
**B1**

(12) **EUROPÄISCHE PATENTSCHRIFT**

(45) Veröffentlichungstag der Patentschrift: **07.11.90**

(21) Anmeldenummer: **87101532.7**

(22) Anmeldetag: **05.02.87**

(51) Int. Cl.⁵: **G 05 D 23/275, F 24 H 9/20**

(54) Schaltung eines elektrischen Wärmespeicher-Heizgerätes.

(30) Priorität: **23.05.86 DE 3617332**

(43) Veröffentlichungstag der Anmeldung:
**02.12.87 Patentblatt 87/49**

(45) Bekanntmachung des Hinweises auf die
Patenterteilung:
**07.11.90 Patentblatt 90/45**

(84) Benannte Vertragsstaaten:
**AT BE CH DE GB LI**

(56) Entgegenhaltungen:
**EP-A-0 132 683**
**GB-A-1 215 453**

(73) Patentinhaber: **KKW Kulmbacher Klimageräte-Werk GmbH**
**Postfach 1569**
**D-8650 Kulmbach (DE)**

(72) Erfinder: **Kaim, Leo**
**Wolfersdorfer Strasse 4**
**D-8647 Stockheim (DE)**

(74) Vertreter: **Tergau, Enno**
**Patentanwälte Tergau & Pohl Postfach 11 93 47**
**Hefnersplatz 3**
**D-8500 Nürnberg 11 (DE)**

Courier Press, Leamington Spa, England.

**Beschreibung**

Die Erfindung bezieht sich auf eine Schaltung eines elektrischen Wärmespeicher-Heizgerätes mit einem Heizelement, einem von diesem Heizelement beheizten Speicherkern und einem Raumthermostaten, im einzelnen nach Gattungsbegriff des Patentanspruches.

Es ist bereits eine Schaltung eines elektrischen Wärmespeicher-Heizgerätes der im Gattungsbegriff genannten Art durch Geräte bekannt, die auf dem Markt sind. Wenn bei der bekannten Schaltung das als Zusatzheizung dienende Heizelement von einem Stromkreis in den anderen umgeschaltet wird, entsteht infolge eines beim Schaltvorgang auftretenden Lichtbogens ein an sich unbeachtlicher Fehlerstrom. Ist jedoch in mindestens einem der beiden Stromkreise ein Fehlerstrom-Schutzschalter angeordnet, kann ein solcher Fehlerstrom den Schutzschalter auslösen, der dann den betreffenden Stromkreis abschaltet, obwohl das nicht zwingend geboten war.

Es ist eine Regelungseinrichtung für Elektro-Wärmespeicher Heizgeräte bekannt (EP—A2—0 132 683), die mit einem hydraulischen Kernfühler, einem von einem Heizwiderstand beeinflußbaren hydraulischen Steuerfühler und einer Membrandose arbeitet, die Schaltkontakte beaufschlagt. Hierbei wird die zulässige Volumenausdehnung der Membrandose größer gehalten als die innerhalb der Anwendungsgrenztemperatur maximal mögliche Ausdehnung des in den Fühlern, Kapillarrohren und Kupplung eingespannten Hydraulikmediums. Eine derartige Regeleinrichung kann bei Wärmespeicher-Heizgeräten, wie sie oben geschildert sind und sich auf dem Markt befinden, eingesetzt werden. Aus der angezogenen Druckschrift geht jedoch nicht hervor, daß das Heizelement im Niedertarif-Stromkreis ggfs. zusammen mit weiteren Heizelementen, zum Aufladen des Speicherkernes und im Hochtarif-Stromkreis alleine als Zusatzheizung dient. Bei Einsatz einer derartigen Regelungseinrichtung wäre auch noch nicht das Problem gelöst, Fehlerströme zu vermeiden.

Aufgabe der Erfindung ist es, die Schaltung eines elektrischen Wärmespeicher-Heizgerätes der im Gattungsbegriff des Patentanspruches genannten Art zu auszubilden, daß ein Ansprechen von Fehlerstrom-Schutzschaltern durch das Umschalten des als Zusatzheizung dienenden Heizelementes auf besonders einfache Weise verhindert ist.

Die gestellte Aufgabe wird erfindungsgemäß mit einer Schaltung eines elektrischen Wärmespeicher-Heizgerätes nach Patentanspruch gelöst.

Durch die getroffene Anordnung wird bei jedem Schaltvorgang das als Zusatzheizung dienende Heizelement zunächst von dem momentan mit ihm verbundenen Stromkreis getrennt und erst nach Ablauf einer durch die Fühler bewirkten zeitlichen Verzögerung mit dem anderen Stromkreis verbunden. Auf diese Weise wird ein bei jedem Umschaltvorgang zwangsläufig auftretender, an sich unbeachtlicher Fehlerstrom nicht von einem Stromkreis auf den anderen Stromkreis verschleppt und ein Ansprechen von Fehlerstrom-Schutzschaltern verhindert.

Zeitlich verzögertes Umschalten von Kontaktpaaren zum Abschalten der Niedertarif-Heizung und Umschalten auf eine Zusatzheizung bei Hochtarif ist bekannt (GB—A—1 215 453). Hierbei wird jedoch mit einem zusätzlichen Relais in einer verhältnismäßig aufwendigen Schaltung gearbeitet. Das Problem der möglichen Fehlauslösung bei Fehlerstrom-Schutzschaltern wird nicht angesprochen. Die schon bei dem Stand der Technik gegebenen Vorteile sind durch die gefundene Lösung nicht beeinträchtigt.

Da als Zusatzheizung ein Heizelement verwendet wird, das auch zur Aufladung des Wärmespeichers dient, ist für die Zusatzheizung kein weiteres Heizelement erforderlich, das zusätzliche Kosten verursachen würde. Das Temperaturniveau im Wärmespeicher wird nicht verändert, weil der Kernfühler nach wie vor in Funktion bleibt. Die Einrichtung zum Mischen von Raumluft und aufgeheizter Luft bleibt ebenfalls unverändert wirksam. Sie ist ohnehin auf den maximalen Ladestand des Wärmespeichers abgestimmt. Im Falle der Zusatzheizung wird Wärme nur von einem einzigen Heizelement abgegeben, das keine überhöhte Luftaustrittstemperatur erzeugen kann.

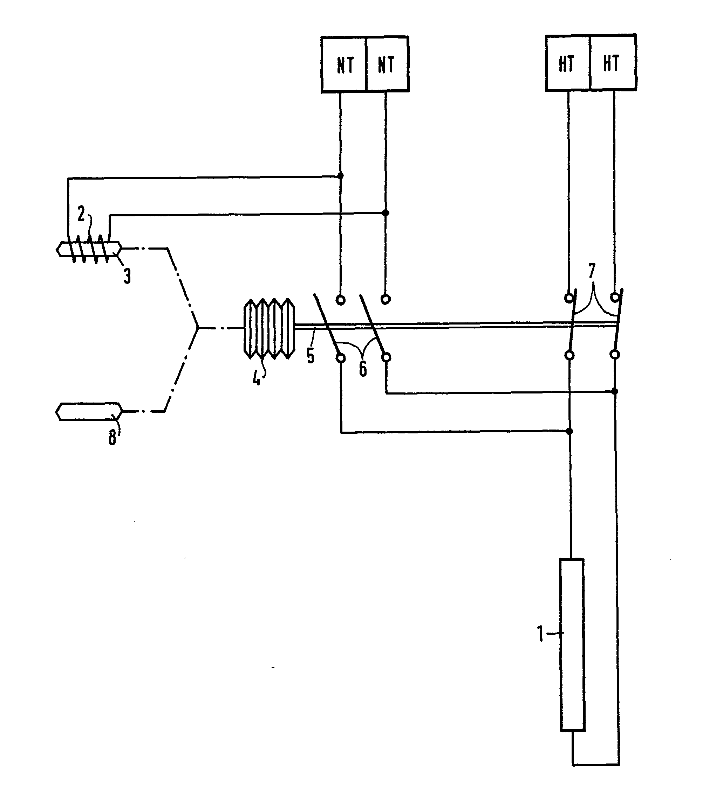

Ein Ausführungsbeispiel der Erfindung ist in der Zeichnung dargestellt, die ein Schaltschema zeigt.

In der Zeichnung ist mit 1 ein Heizelement bezeichnet, das aus einem Niedertarif-Stromkreis NT in einen Hochtarif-Stromkreis HT und umgekehrt schaltbar ist.

Für das Umschalten des Heizelementes 1 ist ein Relais vorgesehen, das weiter unten näher erläutert wird.

Das Heizelement 1 dient im Niedertarif-Stromkreis NT zum Aufladen eines nicht dargestellten Speicherkerns. Es kann, je nach Größe des gesamten Heizgerätes, als einziges Heizelement, aber auch zusammen mit weiteren Heizelementen, im Speicherkern angeordnet sein.

Im Hochtarif-Stromkreis HT wird das Heizelement 1 als Zusatzheizung betrieben, jedoch nur dann, wenn vier Bedingungen gleichzeitig erfüllt sind.

Die erste Bedingung ist erfüllt, wenn der Niedertarif-Strom gesperrt ist. Bei nicht gesperrtem Niedertarif-Strom wäre es unwirtschaftlich, zur Heizung Hochtarif-Strom zu verbrauchen. Abgesehen davon, ist in aller Regel eine Zusatzheizung entbehrlich, wenn Niedertarif-Strom zur Verfügung steht und der Speicherkern ausreichend geladen ist, zum Beispiel auf mehr als ein Drittel seiner Nennaufladung.

Als zweite Bedingung muß erfüllt sein, daß ein nicht dargestellter Raumthermostat Wärme anfordert.

Daneben muß ein dem Raumthermostaten zugeordneter Handschalter in seine Einschaltposition gesetzt sein (dritte Bedingung).

Letztlich muß sichergestellt sein, daß voraussichtlich die im Speicherkern vorhandene Wärme nicht ausreicht, den vom Raumthermostaten geforderten Wärmebedarf zu decken. Das ist erfahrungsgemäß bei Speicherkernen kleinerer Größe, beispielsweise bei sogenannten Flachspeichern bei einem Ladestand der Fall, der nicht mehr als ein Drittel der Nennaufladung beträgt (vierte Bedingung).

Das bereits erwähnte Relais hat eine im Niedertarif-Stromkreis NT liegende Heizpatrone 2 als Erregerglied.

Teil des Relais ist ferner ein Wärmefühler 3, der zusammen mit der Heizpatrone 2 einen Ausdehnungsregler bildet.

Weitere Teile des Relais sind ein Ausdehnungsglied 4, ein Schaltglied 5, ein Kontaktpaar 6 und ein weiteres Kontaktpaar 7.

Der Wärmefühler 3 ist mit dem Ausdehnungsglied 4 verbunden, das im dargestellten Beispiel ein metallischer Faltenbalg ist. Am freien Ende des Ausdehnungsgliedes 4 greift das Schaltglied 5 an, das seinerseits am Kontaktpaar 6 und am weiteren Kontaktpaar 7 angreift.

In der Darstellung ist das Kontaktpaar 6 zum Schließen- und Öffnen des Niedertarif-Stromkreises NT eingesetzt.

Das weitere Kontaktpaar 7 hat die Funktion des Öffnens und Schließens des Hochtarif-Stromkreises HT.

Die beiden Kontaktpaare 6, 7 sind insoweit gegensätzlich, als eines von ihnen als Schließer und das andere als Öffner ausgebildet ist. Im dargestellten Beispiel ist das Kontaktpaar 6 der Schließer und das Kontaktpaar 7 der Öffner.

Die beiden Kontaktpaare 6, 7 sind so eingestellt, daß bei steigender Temperaturbeaufschlagung des Wärmefühlers 3 durch die Heizpatrone 2 und/oder bei steigender Temperaturbeaufschlagung eines auf die Temperatur des Speicherkerns reagierenden Kernfühlers 8 zuerst das als Öffner ausgebildete Kontaktpaar 7 aus der dargestellten Schließstellung bewegt wird. Mit zeitlichem Abstand danach wird dann erst das Schaltglied 6 aus seiner Offenstellung in seine Schließstellung bewegt.

Für den bezüglich der Kontaktpaare 6, 7 geschilderten Sachverhalt ist maßgebend, daß das Heizelement 1 bei kaltem Speicherkern, wie dargestellt, in den Hochtarif-Stromkreis eingeschaltet ist.

Sobald Niedertarif-Strom zur Verfügung steht, wird die Heizpatrone 2 erregt. Diese heizt den Wärmefühler 3 auf. Der Wärmefühler 3 bewegt darauf das Ausdehnungsglied 4 und dieses das Schaltglied 5. Im Verlauf der durch den Niedertarif-Strom verursachten Bewegungen, Öffnet das Kontaktpaar 7 den Hochtarif-Stromkreis HT, womit das Heizelement 1 vom Hochtarif-Stromkreis HT abgeschaltet ist. Kurzzeitig danach schließt das Kontaktpaar 6 den Niedertarif-Stromkreis NT und schließt damit das Heizelement 1 an den Niedertarif-Stromkreis NT an. Der nunmehr erreichte Zustand bleibt solange erhalten, wie Niedertarif-Strom zur Verfügung steht, mit dem der Speicherkern regelmäßig bis zur Nennaufladung aufgeladen wird.

Nachdem die Nennaufladung erreicht ist, wird der Niedertarif-Strom abgeschaltet. Sobald dies der Fall ist, schaltet das Relais das Heizelement 1 vom Niedertarif-Stromkreis NT in den Hochtarif-Stromkreis HT.

Bei Wärmebedarf wird der Speicherkern entladen. Sinkt die Ladung des Speicherkerns auf den vorgegebenen Ladestand, beispielsweise auf ein Drittel seiner Nennaufladung ab, sind bereits zwei Bedingungen erfüllt, unter welchen das Heizelement 1 Zusatzheizung wird (es ist erstens kein Niedertarif-Strom vorhanden und es ist gemäß Bedingung vier der Speicherkern ungenügend geladen).

Nur wenn jedoch die ebenfalls eingangs genannten weiteren Bedingungen zwei und drei erfüllt sind, wird das Heizelement 1 als Zusatzheizung betrieben, wobei der Raumthermostat Wärme anfordert (Bedingung 2) und der Handschalter seine Einschaltstellung einnimmt (Bedingung 3).

Der Zustand von dem ausgegangen wurde, ist nunmehr wieder erreicht. Dieser Zustand bleibt solange erhalten, bis Niedertarif-Strom den Zyklus wieder von neuem beginnen läßt.

Bezugzeichenliste
    1 = Heizelement
    NT = Niedertarif-Stromkreis
    HT = Hochtarif-Stromkreis
    2 = Heizpatrone
    3 = Wärmefühler
    4 = Ausdehnungsglied
    5 = Schaltglied
    6 = Kontaktpaar
    7 = weiteres Kontaktpaar
    8 = Fühler

**Patentanspruch**

Schaltung eines elektrischen Wärmespeicher-Heizgerätes mit einem Heizelement, einem von diesem Heizelement beheizten Speicherkern und einem Raumthermostaten, mit den Merkmalen:

a) für das Schalten dieses Heizelementes aus einem Niedertarif-Stromkreis (NT) in einen Hochtarif-Stromkreis (HT) und umgekehrt ist ein Relais mit einem Kontaktpaar und einem im Niedertarif-Stromkreis (NT) liegenden Erregerglied vorgesehen;

b) dieses Heizelement dient im Niedertarif-Stromkreis (NT), gegebenenfalls zusammen mit weiteren Heizelementen, zum Aufladen des Speicherkerns und im Hochtarif-Stromkreis (HT) alleine als Zusatzheizung;

c) das Heizelement ist nur dann im Hochtarif-Stromkreis (HT) wirksam, wenn bei gesperrtem Niedertarif-Strom (NT) gleichzeitig der Raumthermostat Wärme fordert, wenn ein dem Raumthermostaten zugeordneter Handschalter in seine Einschaltposition gesetzt ist und wenn die Ladung des Speicherkerns unter einen vorgegebenen Ladestand von beispielsweise einem Drittel seiner Nennaufladung abgesunken ist; gekennzeichnet durch die Merkmale:

d) das im Niedertarif-Stromkreis (NT) liegende Erregerglied des Relais ist eine Heizpatrone (2) für einen Wärmefühler (3) eines Ausdehnungsreglers, wobei der Wärmefühler (3) mit dessem Ausdehnungsglied (4) verbunden ist und wobei das Ausdehnungsglied (4) mit einem Schaltglied (5) an dem Kontaktpaar (6) und einem weiteren Kontaktpaar (7) angreift;

e) das eine der beiden Kontaktpaare (6) ist zum Schließen und Öffnen des Niedertarif-Stromkreises (NT) vorgesehen, während das andere Kontaktpaar zum Öffnen und Schließen des Hochtarif-Stromkreises (HT) vorgesehen ist;

f) das eine der beiden Kontaktpaare (7) ist in bezug auf die Ruhestellung des Erregergliedes als Öffner ausgebildet, während das andere Kontaktpaar (6) als Schließer ausgebildet ist;

g) parallel zum Wärmefühler (3) ist mit dem Ausdehnungsglied (4) ein auf die Temperatur des Speicherkernes reagierender Kernfühler (8) verbunden;

h) die beiden Kontaktpaare (6, 7) sind so justiert, daß bei steigender Temperaturbeaufschlagung des Wärmefühlers (3) und des Kernfühlers (8) zuerst das eine als Öffner ausgebildete Kontaktpaar (7) und dann erst durch die Temperaturgradienten an den Fühlern (3, 8) zeitlich verzögert, das andere als Schließer ausgebildete Kontaktpaar (6) betätigt wird oder umgekehrt, daß das andere Kontaktpaar (6) als Öffner ausgebildet ist und zuerst betätigt wird und das eine Kontaktpaar (7), das als Schließer ausgebildet ist, dann betätigt wird.

**Revendication**

Montage d'un appareil électrique de chauffage à accumulation avec un élément chauffant, un noyau-accumulateur chauffé par cet élément chauffant et un thermostat d'ambiance, comportant les particularités:

a) pour commuter cet élément chauffant du circuit tarif bas (NT) sur un circuit tarif plein (HT), et inversement, il est prévu un relais avec une paire de contacts et un organe d'excitation situé dans le circuit tarif bas (NT);

b) cet élément chauffant sert, dans le circuit tarif bas (NT), éventuellement avec un second élément chauffant, à la charge du noyau-accumulateur, et dans le circuit tarif plein (HT), à lui seul comme chauffage supplémentaire;

c) l'élément chauffant n'est efficace dans le circuit plein tarif (HT) que si, le circuit bas tarif (NT) étant bloqué, le thermostat d'ambiance demande en même temps de la chaleur, si un interrupteur manuel, associé au thermostat d'ambiance, est placé dans sa position fermée, et si la charge du noyau-accumulateur est tombée en dessous d'un niveau de charge prédéterminé, égal, par exemple au tiers de sa charge nominale remarquable par les caractéristiques:

d) l'organe d'excitation du relais, situé dans le circuit tarif bas, est une cartouche de chauffage (2) pour un détecteur de chaleur (3) d'un régulateur à expansion, le détecteur de chaleur (3) étant relié à l'organe d'expansion (4) de ce régulateur, alors que l'organe d'expansion (4) attaque avec un dispositif de commutation la paire de contacts (6) et une seconde paire de contacts (7)

e) l'une (6) des deux paires de contacts est prévue pour fermer et ouvrir le circuit tarif bas (NT), alors que l'autre des paires de contacts est prévue pour l'ouverture et la fermeture du circuit plein tarif (HT).

f) l'une (7) des deux paires de contacts est réalisée, par rapport à la position de repos de l'organe d'excitation, comme dispositif d'ouverture, alors que l'autre paire de contacts (6) est réalisée comme dispositif de fermeture;

g) en parallèle au détecteur de chaleur (3) est relié à l'organe d'expansion (4), un détecteur de noyau (8) qui réagi à la température du noyau-accumulateur

h) les deux paires de contacts (6, 7) sont ajustées de telle façon que pour une charge croissante en température du détecteur de chaleur (3) et du détecteur du noyau (8) c'est d'abord qu'est actionnée la paire de contacts (7) réalisée comme dispositif d'ouverture, et ce n'est qu'ensuite, et avec un retard dans le temps, conditionné par les gradients de température au niveau des détecteurs (3, 8), qu'est actionnée l'autre paire de contacts (6), réalisée comme dispositif de fermeture ou inversement, que l'autre paire de contacts (6) est réalisée comme dispositif d'ouverture et est commandée en premier lieu, alors que la première paire de contacts (7), réalisée comme dispositif de fermeture, est commandée ensuite.

**Claim**

Circuit arrangement of an electrical storage heater having a heating element, a storage core, which is heated by this heating element, and a room thermostat, having the features:

a) a relay having a contact pair and an excitation element in the low-tariff electric circuit (NT) is provided for switching said heating element from a low-tariff electric circuit (NT) into a high-tariff electric circuit (HT) and vice versa;

b) this heating element is used in the low-tariff electric circuit (NT), if applicable, together with further heating elements, to charge the storage core and in the high-tariff electric circuit (HT) alone as additional heating;

c) the heating element is only effective in the high-tariff electric circuit (HT) if when the low-tariff current (NT) is blocked the room thermostat simultaneously requires heat, if a hand switch associated with the room thermostat is set into its switch-on position and if the charge of the storage core has fallen below a preset charging state of, for example, one third of its nominal charging; characterised by the features:

d) the excitation element of the relay in the low-tariff electric circuit (NT) is a heating cartridge (2) for a heat sensor (3) of an expansion controller, the heat sensor (3) being connected to the expansion element (4) of said controller and the expansion element (4) acting with a switching element (5) on the contact pair (6) and a further contact pair (7);

e) one of the two contact pairs (6) is provided for the purpose of closing and opening the low-tariff electric circuit (NT), whilst the other contact pair is provided for the purpose of opening and closing the high tariff electric circuit (HT);

f) one of the two contact pairs (7) is formed as a normally-closed contact in relation to the rest position of the excitation element, whilst the other contact pair (6) is formed as a normally-open contact;

g) a core sensor (8), which responds to the temperature of the storage core, is connected to the expansion element (4), parallel to the heat sensor (3);

h) the two contact pairs (6, 7) are adjusted in such a manner that with rising temperature action upon the heat sensor (3) and the core sensor (8) first the one contact pair (7) formed as a normally-closed contact is actuated and then only with a time delay as a result of the temperature gradients at the sensors (3, 8) the other contact pair (6) formed as a normally-open contact is actuated or vice versa that the other contact pair (6) is formed as a normally-closed contact and is actuated first and then the contact pair (7), which is formed as a normally-open contact, is actuated.